# EUROPEAN PATENT SPECIFICATION

(11) **EP 3 768 458 B1**
(45) Date of publication and mention of the grant of the patent: **20.03.2024**
(21) Application number: 19715740.7
(22) Date of filing: 22.03.2019
(51) Int. Cl.: B23K 13/02, H05B 6/10, H05B 6/06

(54) **INDUCTION HEATING EXTENSION CABLES INCLUDING CONTROL CONDUCTORS**
INDUKTIONSHEIZVERLÄNGERUNGSKABEL MIT STEUERLEITERN
FILS D'EXTENSION DE CHAUFFAGE PAR INDUCTION COMPRENANT DES CONDUCTEURS DE COMMANDE

(30) Priority: 22.03.2018 US 201815928272
(43) Date of publication of application: 27.01.2021
(60) Divisional application: 24151712.7
(73) Proprietor: Illinois Tool Works, Inc., Glenview, Illinois 60025 (US)
(72) Inventor: SALSICH, Anthony V., Glenview, Illinois 60025 (US); VERHAGEN, Paul, Glenview, Illinois 60025 (US)
(74) Representative: HGF
(86) International application number: PCT/US2019/023587
(87) International publication number: WO 2019/183478

(56) References cited:
- WO-A1-2016/084112
- US-A1- 2004 084 443
- US-A1- 2018 049 277

## Description

### BACKGROUND

Induction heating of workpieces to be welded, such as pipe, often involves arranging a fixture and/or one or more conductive cables in proximity to the workpiece. The power supply that provides induction heating power may be located a substantial distance from the workpiece and/or the fixture, such that measuring heating parameters directly at the power supply is not feasible.

US2018/049277A1 discloses induction heating power supplies, data collection systems, and induction heating systems to communicate over an induction heating cable. An example induction heating power supply, US2018/049227A1, includes a power conversion circuit configured to: convert input power into induction heating power and transmit the induction heating power via an induction heating cable, and at least one of a receiver circuit coupled to the induction heating cable and configured to receive data via the induction heating cable or a transmitter circuit coupled to the induction heating cable and configured to transmit data via the induction heating cable.

### SUMMARY

Induction heating extension cables including control conductors are disclosed, substantially as illustrated by and described in connection with at least one of the figures, as set forth more completely in the claims.

The invention is an induction heating monitoring apparatus according to claim 1.

### BRIEF DESCRIPTION OF THE DRAWINGS

FIG. 1A is a block diagram of an example induction heating system including a cable assembly constructed in accordance with an example not forming part of the claimed invention but useful for understanding the scope of the invention.
FIG. 1B is a block diagram of another example induction heating system, in accordance with aspects of this disclosure.
FIG. 2 is an example implementation of the cable assembly of FIGS. 1A and/or 1B.

The figures are not necessarily to scale. Where appropriate, similar or identical reference numbers are used to refer to similar or identical components.

### DETAILED DESCRIPTION

Induction heating extension cables deliver induction heating current between an induction heating power supply (e.g., a power supply producing and/or converting induction heating currents) and an induction heating cable (e.g., a cable that is positioned proximate a workpiece such that the induction heating currents induce eddy currents within the workpiece). Induction heating extension cables may have the induction heating current-carrying conductors tightly coupled to reduce (e.g., minimize or eliminate) leakage and improve efficiency.

In contrast with conventional cables, disclosed example extension cables include an additional control cable that transfers data and/or power and that is contained within the outer protective layer of the extension cable (e.g., is not exterior to the extension cable). Disclosed example extension cables couple an induction heating power supply to a remote device, which may be located near the workpiece, to exchange data with the remote device and/or provide power to the remote device. Additionally, disclosed examples may omit electrical isolation measures that may be required when the data is electrically coupled to high-power heating conductors, while being protected by the relatively tough outer jacket or protective layer of the extension cable from physical damage that may occur in a welding-type environment.

Disclosed example cable assemblies include: a first plurality of conductors in a Litz cable arrangement, an outer protective layer configured to protect the first plurality of conductors from physical damage, and a second plurality of conductors that are electrically isolated from the first plurality of conductors and are protected by the outer protective layer from physical damage.

In some example cable assemblies, the second plurality of conductors include a twisted pair of wires. In some example cable assemblies, the second plurality of conductors include coaxial conductors. Some example cable assemblies further include a coupler to couple the first plurality of conductors to an induction heating cable and to couple the second plurality of conductors to an induction heating accessory. In some such examples, the second plurality of conductors conduct at least one of power or data between the induction heating accessory and an induction heating power supply.

In some examples, the first plurality of conductors are configured to conduct induction heating current. In some examples, the first plurality of conductors have a total cross-sectional area of at least 8.37 square millimeters, exclusive of electrical insulation. Some example cable assemblies further include a coupler to couple the first plurality of conductors to an induction heating power supply and to couple the second plurality of conductors to the induction heating power supply. In some such examples, the coupler couples the first plurality of conductors to power connectors of the induction heating power supply. In some examples, the coupler couples the second plurality of conductors to a communication connector of the induction heating power supply.

Disclosed example induction heating systems include an induction heating power supply, a monitoring device remote from the induction heating power supply, and a cable assembly. The cable assembly includes a first plurality of conductors in a Litz cable arrangement, an outer protective layer configured to protect the first plurality of conductors from physical damage, and a second plurality of conductors that are electrically isolated from the first plurality of conductors and are protected by the outer protective layer from physical damage.

In some examples, the second plurality of conductors comprise a twisted pair of wires. In some examples, the second plurality of conductors comprise coaxial conductors. Some example induction heating systems further include a coupler to couple the first plurality of conductors to an induction heating cable and to couple the second plurality of conductors to the monitoring device. In some such examples, the second plurality of conductors conduct at least one of power or data between the monitoring device and the induction heating power supply.

In some example induction heating systems, the first plurality of conductors conduct induction heating current. In some examples, the first plurality of conductors have a total cross-sectional area of at least 8.37 square millimeters, exclusive of electrical insulation. Some example induction heating systems further include a coupler to couple the first plurality of conductors to the induction heating power supply and to couple the second plurality of conductors to the induction heating power supply. In some such examples, the coupler couples the first plurality of conductors to power connectors of the induction heating power supply. In some examples, the coupler couples the second plurality of conductors to a communication connector of the induction heating power supply.

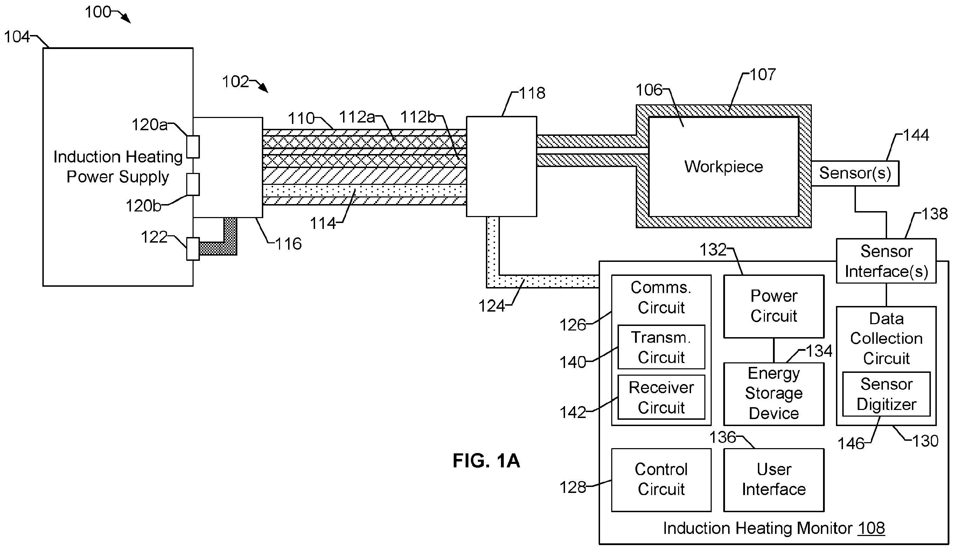

FIG. 1A is a block diagram of an example induction heating system 100 including a cable assembly 102. The heating system 100 includes an induction heating power supply 104 that provides heating power to a workpiece 106 via the cable assembly 102 and an induction heating cable 107. The system 100 further includes a induction heating monitor 108. The induction heating monitor 108 may be a monitoring device for monitoring the workpiece 106 and/or may be any other type of induction heating accessory.

The cable assembly 102 includes an outer protective layer 110, multiple conductors 112a, 112b in a Litz configuration, and a second set of two or more conductors 114. The Litz conductors 112a, 112b provide current to the heating cable 107. When the heating cable 107are arranged proximate the workpiece 106 (e.g., wrapped around the workpiece 106, attached to a fixture configured to direct the current to the workpiece 106), the power supply 104 and the heating cable 107induce Eddy currents into the workpiece 106 to inductively heat the workpiece 106. In some examples, each of the example Litz conductors 112a, 112b may have effective gauge equivalent to American Wire Gauge (AWG) 8 (e.g., a total cross-sectional area of at least 8.37 square millimeters, exclusive of the electrical insulation of the Litz conductors) or larger. In examples in which multiple Litz conductors are used to implement each of the Litz conductors 112a, 112b, the combination of Litz conductors used to implement each of the Litz conductors has an effective gauge equivalent to AWG 8 or larger (e.g., multiple conductors implementing the Litz conductor 112a have a combined total cross-sectional area of at least 8.37 square millimeters, exclusive of the electrical insulation of the Litz conductors, and multiple conductors implementing the Litz conductor 112b have a combined total cross-sectional area of at least 8.37 square millimeters). In still other examples, the combination of the Litz conductors 112a, 112b may have effective gauge equivalent to AWG 8 (e.g., each of the Litz conductors 112a, 112b may have a gauge equivalent less than AWG 8).

The second conductors 114 are contained within the outer protective layer 110 (e.g., an outer jacket) of the cable assembly 102, but is electrically isolated from the Litz conductors 112a, 112b so as to be isolated from the relatively high currents and/or voltages. The example outer protective layer 110 may be constructed using, for example, a thermoplastic polyester elastomer (e.g., Hytrel^{®}), polyurethane and/or any other material and/or combination of materials that provides mechanical and electrical protection to the Litz conductors 112a, 112b and the second conductors 114. The second conductors 114 may deliver power to the induction heating monitor 108 and/or exchange data signals between the power supply 104 and the induction heating monitor 108. Example implementations of the second conductors 114 include one or more twisted pairs of conductors or one or more coaxial cables. Other implementations may also be used.

The example cable assembly 102 of FIG. 1A further includes a power supply coupler 116 and a heating cable coupler 118. The power supply coupler 116 couples the conductors 112a, 112b to power terminals 120a, 120b (e.g., positive and negative terminals) of the induction heating power supply 104 and/or couples the second conductors 114 to a communications terminal 122 of the induction heating power supply 104. The power terminals 120a, 120b may be studs that transmit the heating power for heating the workpiece 106 via the induction heating cable 107. The example induction heating power supply 104 may exchange data and/or provide power to the induction heating monitor 108 via the communications terminal 122. In some examples, the power terminals 120a, 120b and the communications terminal 122 are integrated into the same connector, to which the power supply coupler 116 may connect.

The heating cable coupler 118 couples the conductors 112a, 112b to the induction heating cable 107. The heating cable coupler 118 also couples the conductors 114 to the induction heating monitor 108 via external conductors 124. The external conductors 124 may be of the same type as the conductors 114 within the cable assembly 102. For example, if the conductors 114 include twisted pairs of wires, the external conductors 124 may also be twisted pairs of wires. The external conductors 124 may be replaceable so that the appropriate length of external conductors 124 can be used to position the induction heating monitor 108 in a desired location.

The example induction heating monitor 108 communicates with the induction heating power supply 104 via the conductors 114 of the cable assembly 102. As mentioned above, the conductors 114 are electrically isolated from the conductors 112a, 112b that carry the induction heating power, and the conductors 114 and the conductors 112a, 112b are contained within an outer protective layer 110 of the cable assembly 102. In the example of FIG. 1A, the induction heating monitor 108 communicates and/or receives power via the conductors 114 within an extension cable. However, the conductors 114 may also be included at least partially within the heating cable 107.

The induction heating monitor 108 includes a communications circuit 126, a control circuit 128, a data collection circuit 130, a power circuit 132, an energy storage device 134, a user interface 136, and sensor interface(s) 138. The example communications circuit 126 includes a transmitter circuit 140 and a receiver circuit 142.

The example transmitter circuit 140 transmits the induction heating data to the induction heating power supply 104 via the conductors 114 via the external conductors 124 and the heating cable coupler 118. The example receiver circuit 142 may receive data from the induction heating power supply 104. The induction heating power supply 104 may include similar communication circuitry, including transmitter circuitry and/or receiver circuitry, to receive induction heating data and/or transmit configuration data to the induction heating monitor 108. In some examples, the induction heating power supply 104 modifies an induction heating output (e.g., induction heating power, etc.) based on the induction heating data received from the induction heating monitor 108 via the conductors 114.

The transmitter circuit 140 frames induction heating data for transmission via the conductors 114. The induction heating data may be generated from sensor data collected by one or more sensors 144 via the sensor interface(s) 138 and/or the data collection circuit 130. The data collection circuit 130 may include sensor digitizer(s) 146 to digitize data received from the sensor(s) 144. The induction heating data may be converted to digital data via the sensor digitizer 146 and/or input by a user or operator via the user interface 136.

The example sensor(s) 144 may include a temperature sensor (e.g., a thermocouple, a thermistor, a resistive temperature device, an infrared sensor, a semiconductor-based temperature sensor, etc.), a coolant pressure sensor, or a coolant flow sensor, and/or a location sensor. Example induction heating data includes one or more of an ambient temperature at the workpiece 106 being heated with the induction heating cable 107, a temperature of the induction heating cable 107, a temperature of a blanket in contact with the induction heating cable 107, a temperature of the workpiece 106, a measurement of current flowing through the induction heating cable 107, a voltage measurement of a voltage at the induction heating cable 107 (e.g., a voltage across the portion of the induction heating cable 107 inductively coupled to the workpiece 106), an error signal, a temperature of coolant flowing through the induction heating cable 107, a coolant pressure, a coolant flow rate, a workpiece identifier, an induction heating cable identifier, an operator identifier, date information, time information, geographic information, a cable fixture identifier, and/or any type of operator or user input entered at the induction heating monitor 108.

The power circuit 132 extracts power from the conductors 114, 124, which may be multiplexed with data signals. The power circuit 132 provides power to the data collection circuit 130, the sensors 144 (e.g., via the sensor interface(s) 138), the control circuit 128, the user interface 136, and/or the communications circuit 126. Additionally or alternatively, the power circuit may charge the energy storage device 134. The example energy storage device 134 provides power to the data collection circuit 130, the sensors 144 (e.g., via the sensor interface(s) 138), the control circuit 128, the user interface 136, and/or the communications circuit 126 when the power circuit 132 is not capable of powering the components. The example energy storage device 134 may include one or more batteries, one or more capacitors, and/or any other type of energy storage device.

The example user interface 136 may include any type(s) of user interface devices, such as selection buttons, switches, dials, number pads, touchscreens, and/or any other type of user interface device.

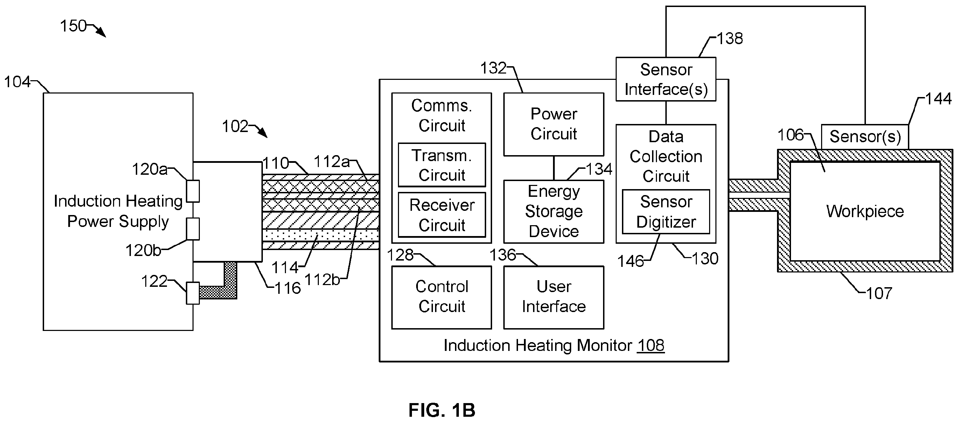

FIG. 1B is a block diagram of another example induction heating system 150. The induction heating system 150 of FIG. 1B is similar to the induction heating system 100 of FIG. 1A, and includes the cable assembly 102, the induction heating power supply 104, the workpiece 106, the induction heating cable 107, the induction heating monitor 108, the outer protective layer 110, the conductors 112a, 112b in the Litz configuration, the second set of two or more conductors 114, the power supply coupler 116, the power terminals 120a, 120b, and the communications terminal 122.

In contrast with the example system 100 of FIG. 1A, the example system 150 couples the cable assembly 102 to the induction heating monitor 108 instead of a heating cable coupler 118. The example induction heating monitor 108 receives the power and/or data via the second conductors 114 (e.g., by terminating the second conductors 114). The induction heating monitor 108 of FIG. 1B passes the heating power from the conductors 112a, 112b through to the heating cable 107. In some examples, the induction heating monitor 108 may include connectors and/or terminations for the conductors 112a, 112b and for the heating cable 107, and include passthrough conductors to connect the conductors 112a, 112b and the heating cable 107.

The example induction heating monitor 108 of FIG. 1B includes the communications circuit 126, the control circuit 128, the data collection circuit 130, the power circuit 132, the energy storage device 134, the user interface 136, and the sensor interface(s) 138. The induction heating monitor 108 collects induction heating data from one or more sensor(s) 144.

While example couplers 116, 118 are disclosed, the example cable assembly 102 may be coupled to the induction heating power supply 104, the heating cable 107, and/or the induction heating monitor 108 using any combination and/or types of couplers and/or hard wiring.

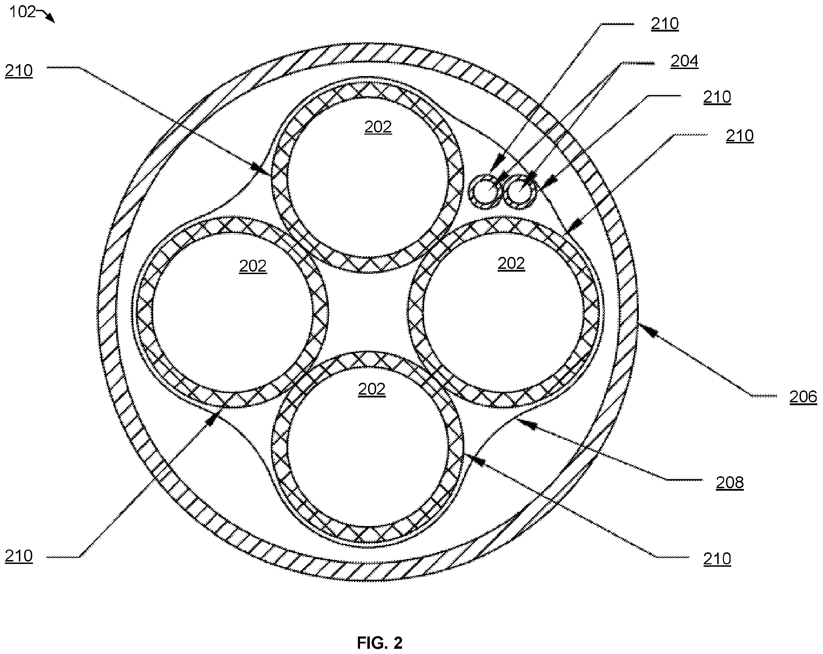

FIG. 2 is an example implementation of the cable assembly 102 of FIGS. 1A and/or 1B. The example cable assembly 102 includes four Litz wire bundles 202, two conductors 204 arranged in a twisted pair configuration, an outer jacket 206, and an internal wrap 208. Each of the Litz wire bundles 202 and the conductors 204 include an additional jacket 210, which may be constructed of a thermoplastic elastomer (TPE). The example outer jacket 206 is constructed of a thermoplastic polyester elastomer (e.g., Hytrel^{®}), polyurethane and/or any other material and/or combination of materials that provides mechanical and electrical protection to the Litz wire bundles 202 and the conductors 204. The internal wrap 208 may be constructed using polytetrafluoroethylene (PTFE) tape.

As shown in FIG. 2, the outer jacket 206 provides an outer protective layer that protects the Litz wire bundles 202 and the twisted pair conductors 204 from physical damage.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, blocks and/or components of disclosed examples may be combined, divided, re-arranged, and/or otherwise modified. Therefore, it is intended that the present method and/or system not be limited to the particular implementations disclosed, but that the present method and/or system will include all implementations falling within the scope of the appended claims.

## Claims

1. An induction heating monitoring apparatus (108) comprising:
a data collection circuit (130) configured to collect induction heating data from a sensor (144), the data being associated with an induction heating operation performed using an induction heating power supply (104), the data collection circuit (130) comprising a sensor interface configured to receive data from a sensor, and a sensor digitizer (146) which digitizes the data; and
a communication circuit (126) comprising a transmitter circuit (140) configured to transmit the digitized data to the induction heating power supply (104) via one or more first conductors (114) of a cable assembly (102);
the induction heating monitoring apparatus (108) being **characterised in that** the one or more first conductors (114) are electrically isolated from one or more second conductors (112a, 112b) configured to carry induction heating power, the one or more first conductors (114) and the one or more second conductors (112a, 112b) contained within an outer jacket (110) of the cable assembly (102); and
**in that** the induction heating monitoring apparatus (108) further comprises first terminations configured to be coupled to the second one or more conductors (112a, 112b) and second terminations coupled to the first terminations to be coupled to at least one of an induction heating extension cable or an induction heating blanket.

2. The apparatus (108) as defined in claim 1, wherein the cable assembly (102) comprises an extension cable configured to conduct current between the induction heating power supply (104) and an induction heating coil.

3. The apparatus (108) as defined in claim 1, wherein the communication circuit (126) further comprises
a receiver circuit (142) configured to receive configuration data from the induction heating power supply (104).

4. The apparatus (108) as defined in claim 1, further comprising a power circuit (132) configured to receive power via the one or more first conductors (114) and to provide power to the data collection circuit (130).

5. The apparatus (108) as defined in claim 1, wherein the sensor interface (138) is configured to receive data from at least one of a thermocouple, a thermistor, a resistance temperature detector, an infrared sensor, a semiconductor-based temperature sensor, a pressure sensor, a flow sensor, or a location sensor.

6. The apparatus (108) as defined in claim 1, wherein the second one or more conductors (112a, 112b) comprise Litz wire.

7. An induction heating system (100), comprising:
an induction heating power supply (104);
a cable assembly (102), comprising:
one or more second conductors in a Litz cable arrangement;
an outer jacket (110) configured to protect the one or more second conductors (112a, 112b) from physical damage; and
one or more first conductors (114) that are electrically isolated from the one or more second conductors (112a, 112b) and are protected by the outer jacket (110) from physical damage; and
an induction heating monitoring apparatus (108) according to claim 1.

8. The induction heating system (100) as defined in claim 7, wherein the induction heating monitoring apparatus (108) is configured to terminate the one or more second conductors (112a, 112b) and to couple the one or more second conductors (112a, 112b) to an induction heating cable (107).

9. The induction heating system (100) as defined in claim 7, further comprising a power circuit (132) configured to receive power via the one or more first conductors (114) and to provide power to the data collection circuit (130).

10. The induction heating system (100) as defined in claim 7, further comprising a sensor (144), the data collection circuit (130) comprising a sensor interface (138) configured to receive data from a sensor (144), for example, from at least one of a thermocouple, a thermistor, a resistance temperature detector, a semiconductor-based temperature sensor, a pressure sensor, a flow sensor, or a location sensor.

11. The induction heating system (100) as defined in claim 7, wherein the induction heating power supply (104) is configured to modify an induction heating output based on the induction heating data.

12. The induction heating system (100) as defined in claim 7, wherein the one or more second conductors (112a, 112b) is configured to conduct induction heating current.

13. The induction heating system (100) as defined in claim 7, wherein the one or more first conductors (114) comprises at least one of a twisted pair of wires or a coaxial cable.

## Patentansprüche

1. Induktionsheizüberwachungsvorrichtung (108), aufweisend:
eine Datenerfassungsschaltung (130), die konfiguriert ist, um Induktionsheizdaten von einem Sensor (144) zu erfassen, wobei die Daten mit einem Induktionsheizvorgang verbunden sind, der unter Verwendung einer Induktionsheizungsstromversorgung (104) durchgeführt wird, wobei die Datenerfassungsschaltung (130) eine Sensorschnittstelle, die konfiguriert ist, um Daten von einem Sensor zu empfangen, und einen Sensordigitalisierer (146), der die Daten digitalisiert, aufweist; und
eine Kommunikationsschaltung (126), die eine Senderschaltung (140) aufweist, die konfiguriert ist, die digitalisierten Daten über einen oder mehrere erste Leiter (114) einer Kabelbaugruppe (102) an die Induktionsheizungsstromversorgung (104) zu übertragen;
wobei die Induktionsheizüberwachungsvorrichtung (108) **dadurch gekennzeichnet ist, dass** der eine oder die mehreren ersten Leiter (114) von einem oder mehreren zweiten Leitern (112a, 112b) elektrisch isoliert sind, die konfiguriert sind, um Induktionsheizleistung zu führen, wobei der eine oder die mehreren ersten Leiter (114) und der eine oder die mehreren zweiten Leiter (112a, 112b) in einem Außenmantel (110) der Kabelbaugruppe (102) enthalten sind; und
dadurch, dass die Induktionsheizüberwachungsvorrichtung (108) ferner erste Anschlüsse, die konfiguriert sind, um mit dem zweiten einen oder den zweiten mehreren Leitern (112a, 112b) gekoppelt zu werden, und zweite Anschlüsse aufweist, die mit den ersten Anschlüssen gekoppelt sind, um mit zumindest einem von einem Induktionsheizverlängerungskabel oder einer Induktionsheizdecke gekoppelt zu werden.

2. Vorrichtung (108) nach Anspruch 1, wobei die Kabelbaugruppe (102) ein Verlängerungskabel aufweist, das konfiguriert ist, um Strom zwischen der Induktionsheizungsstromversorgung (104) und einer Induktionsheizspule zu leiten.

3. Vorrichtung (108) nach Anspruch 1, wobei die Kommunikationsschaltung (126) ferner aufweist:
eine Empfängerschaltung (142), die konfiguriert ist, um Konfigurationsdaten von der Induktionsheizungsstromversorgung (104) zu empfangen.

4. Vorrichtung (108) nach Anspruch 1, die ferner eine Leistungsschaltung (132) aufweist, die konfiguriert ist, um Strom über den einen oder die mehreren ersten Leiter (114) zu empfangen und Strom an die Datenerfassungsschaltung (130) zu liefern.

5. Vorrichtung (108) nach Anspruch 1, wobei die Sensorschnittstelle (138) konfiguriert ist, um Daten von zumindest einem von einem Thermoelement, einem Thermistor, einem Widerstandstemperaturdetektor, einem Infrarotsensor, einem Temperatursensor auf Halbleiterbasis, einem Drucksensor, einem Strömungssensor oder einem Ortssensor zu empfangen.

6. Vorrichtung (108) nach Anspruch 1, wobei der zweite eine oder die zweiten mehreren Leiter (112a, 112b) einen Litzendraht aufweisen.

7. Induktionsheizsystem (100), aufweisend:
eine Induktionsheizungsstromversorgung (104);
eine Kabelbaugruppe (102), aufweisend:
einen oder mehrere zweite Leiter in einer Litz-Kabelbaugruppe;
einen Außenmantel (110), der konfiguriert ist, um den einen oder die mehreren zweiten Leiter (112a, 112b) vor physischen Schäden zu schützen; und
einen oder mehrere erste Leiter (114), die von dem einen oder den mehreren zweiten Leitern (112a, 112b) elektrisch isoliert sind und durch den Außenmantel (110) vor physischen Schäden geschützt sind; und
eine Induktionsheizüberwachungsvorrichtung (108) nach Anspruch 1.

8. Induktionsheizsystem (100) nach Anspruch 7, wobei die Induktionsheizüberwachungsvorrichtung (108) konfiguriert ist, um den einen oder die mehreren zweiten Leiter (112a, 112b) zu enden und den einen oder die mehreren zweiten Leiter (112a, 112b) mit einem Induktionsheizkabel (107) zu koppeln.

9. Induktionsheizsystem (100) nach Anspruch 7, ferner aufweisend eine Leistungsschaltung (132), die konfiguriert ist, um Strom über den einen oder die mehreren ersten Leiter (114) zu empfangen und Strom an die Datenerfassungsschaltung (130) zu liefern.

10. Induktionsheizsystem (100) nach Anspruch 7, ferner aufweisend einen Sensor (144), wobei die Datenerfassungsschaltung (130) eine Sensorschnittstelle (138) aufweist, die konfiguriert ist, um Daten von einem Sensor (144) zu empfangen, beispielsweise zumindest einem von einem Thermoelement, einem Thermistor, einem Widerstandstemperaturdetektor, einem Temperatursensor auf Halbleiterbasis, einem Drucksensor, einem Strömungssensor oder einem Ortssensor.

11. Induktionsheizsystem (100) nach Anspruch 7, wobei die Induktionsheizungsstromversorgung (104) konfiguriert ist, um eine Induktionsheizleistung basierend auf den Induktionsheizdaten zu modifizieren.

12. Induktionsheizsystem (100) nach Anspruch 7, wobei der eine oder die mehreren zweiten Leiter (112a, 112b) konfiguriert sind, um Induktionsheizstrom zu leiten.

13. Induktionsheizsystem (100) nach Anspruch 7, wobei der eine oder die mehreren ersten Leiter (114) zumindest eines von einem verdrillten Paar von Drähten oder einem Koaxialkabel aufweisen.

## Revendications

1. Appareil de surveillance de chauffage par induction (108) comprenant :
un circuit de collecte de données (130) configuré pour collecter des données de chauffage par induction provenant d'un capteur (144), les données étant associées à une opération de chauffage par induction réalisée à l'aide d'une alimentation électrique de chauffage par induction (104), le circuit de collecte de données (130) comprenant une interface de capteur configurée pour recevoir des données provenant d'un capteur, et un numériseur de capteur (146) qui numérise les données ; et
un circuit de communication (126) comprenant un circuit émetteur (140) configuré pour transmettre les données numérisées à l'alimentation électrique de chauffage par induction (104) via un ou plusieurs premiers conducteurs (114) d'un ensemble de câble (102) ;
l'appareil de surveillance de chauffage par induction (108) étant **caractérisé en ce que** le ou les premiers conducteurs (114) sont isolés électriquement du ou des deuxièmes conducteurs (112a, 112b) configurés pour transporter une alimentation de chauffage par induction, le ou les premiers conducteurs (114) et le ou les deuxièmes conducteurs (112a, 112b) étant contenus à l'intérieur d'une gaine externe (110) de l'ensemble de câble (102) ; et
**en ce que** l'appareil de surveillance de chauffage par induction (108) comprend en outre des premières terminaisons configurées pour être couplées aux deuxièmes un ou plusieurs conducteurs (112a, 112b) et des deuxièmes terminaisons couplées aux premières terminaisons pour être couplées à au moins un parmi un câble d'extension de chauffage par induction ou une couverture de chauffage par induction.

2. Appareil (108) selon la revendication 1, dans lequel l'ensemble de câble (102) comprend un câble d'extension configuré pour conduire un courant entre l'alimentation électrique de chauffage par induction (104) et une bobine de chauffage par induction.

3. Appareil (108) selon la revendication 1, dans lequel le circuit de communication (126) comprend en outre
un circuit récepteur (142) configuré pour recevoir des données de configuration provenant de l'alimentation électrique de chauffage par induction (104).

4. Appareil (108) selon la revendication 1, comprenant en outre un circuit d'alimentation (132) configuré pour recevoir de l'alimentation via le ou les premiers conducteurs (114) et pour fournir de l'alimentation au circuit de collecte de données (130).

5. Appareil (108) selon la revendication 1, dans lequel l'interface de capteur (138) est configurée pour recevoir des données provenant d'au moins un parmi un thermocouple, une thermistance, un détecteur de température à résistance, un capteur infrarouge, un capteur de température à base de semi-conducteur, un capteur de pression, un capteur de débit ou un capteur de localisation.

6. Appareil (108) selon la revendication 1, dans lequel les deuxièmes un ou plusieurs conducteurs (112a, 112b) comprennent un fil de Litz.

7. Système de chauffage par induction (100) comprenant :
une fourniture d'alimentation de chauffage par induction (104) ;
un ensemble de câble (102), comprenant :
un ou plusieurs deuxièmes conducteurs dans un agencement de câble de Litz ;
une gaine externe (110) configurée pour protéger le ou les deuxièmes conducteurs (112a, 112b) des dommages physiques ; et
un ou plusieurs premiers conducteurs (114) qui sont isolés électriquement du ou des deuxièmes conducteurs (112a, 112b) et sont protégés par la gaine externe (110) des dommages physiques ; et
un appareil de surveillance de chauffage par induction (108) selon la revendication 1.

8. Système de chauffage par induction (100) selon la revendication 7, dans lequel l'appareil de surveillance de chauffage par induction (108) est configuré pour terminer le ou les deuxièmes conducteurs (112a, 112b) et pour coupler le ou les deuxièmes conducteurs (112a, 112b) à un câble de chauffage par induction (107).

9. Système de chauffage par induction (100) selon la revendication 7, comprenant en outre un circuit d'alimentation (132) configuré pour recevoir de l'alimentation via le ou les premiers conducteurs (114) et pour fournir de l'alimentation au circuit de collecte de données (130).

10. Système de chauffage par induction (100) selon la revendication 7, comprenant en outre un capteur (144), le circuit de collecte de données (130) comprenant une interface de capteur (138) configurée pour recevoir des données provenant d'un capteur (144), par exemple, provenant d'au moins un parmi un thermocouple, une thermistance, un détecteur de température à résistance, un capteur de température à base de semi-conducteur, un capteur de pression, un capteur de débit ou un capteur de localisation.

11. Système de chauffage par induction (100) selon la revendication 7, dans lequel l'alimentation électrique de chauffage par induction (104) est configurée pour modifier une émission de chauffage par induction sur base des données de chauffage par induction.

12. Système de chauffage par induction (100) selon la revendication 7, dans lequel le ou les deuxièmes conducteurs (112a, 112b) sont configurés pour conduire un courant de chauffage par induction.

13. Système de chauffage par induction (100) selon la revendication 7, dans lequel le ou les premiers conducteurs (114) comprennent au moins un parmi une paire de fils torsadée ou un câble coaxial.
